(19) Europäisches Patentamt
European Patent Office
Office européen des brevets

(11) **EP 3 757 532 B1**

(12) **EUROPEAN PATENT SPECIFICATION**

(45) Date of publication and mention
of the grant of the patent:
**12.03.2025 Bulletin 2025/11**

(21) Application number: **19290046.2**

(22) Date of filing: **26.06.2019**

(51) International Patent Classification (IPC):
*G01J 3/18* *(2006.01)*        *G01J 3/10* *(2006.01)*
*G01J 3/26* *(2006.01)*        *G01J 3/28* *(2006.01)*
*G01N 21/27* *(2006.01)*      *G01J 3/02* *(2006.01)*

(52) Cooperative Patent Classification (CPC):
**G01J 3/28; G01J 3/0297; G01J 3/10; G01J 3/1809;**
**G01J 3/26; G01N 21/274;** G01J 2003/2879

(54) **SYSTEM AND METHOD FOR DETERMINING THE SPECTRAL SENSITIVITY OF A SPECTROGRAPH**

SYSTEM UND VERFAHREN ZUR BESTIMMUNG DER SPEKTRALEN EMPFINDLICHKEIT EINES SPEKTROGRAPHEN

SYSTÈME ET PROCÉDÉ DE DÉTERMINATION DE LA SENSIBILITÉ SPECTRALE D'UN SPECTROGRAPHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.12.2020 Bulletin 2020/53**

(73) Proprietors:
• **Airbus Defence and Space GmbH**
**82024 Taufkirchen (DE)**
• **Airbus Defence and Space SAS**
**78130 Les Mureaux (FR)**

(72) Inventors:
• **Rivière, Rémi**
**82024 Taufkirchen (DE)**
• **Gnata, Xavier**
**78130 Les Mureaux (FR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
EP-A1- 3 327 411        CN-A- 105 092 027
US-B1- 7 554 667

• **SEDDON ANGELA B: "Progress in biomedical mid-infrared hyperspectral imaging with fiber-based supercontinuum laser light", PROGRESS IN BIOMEDICAL OPTICS AND IMAGING, SPIE - INTERNATIONAL SOCIETY FOR OPTICAL ENGINEERING, BELLINGHAM, WA, US, vol. 10873, 4 March 2019 (2019-03-04), pages 1087312 - 1087312, XP060119455, ISSN: 1605-7422, ISBN: 978-1-5106-0027-0, DOI: 10.1117/12.2512100**
• **MARTÍN M J ET AL: "Performance of Different Light Sources for the Absolute Calibration of Radiation Thermometers", INTERNATIONAL JOURNAL OF THERMOPHYSICS, SPRINGER US, NEW YORK, vol. 38, no. 9, 25 July 2017 (2017-07-25), pages 1 - 13, XP036699948, ISSN: 0195-928X, [retrieved on 20170725], DOI: 10.1007/S10765-017-2271-1**
• **CHIA-EN YANG: "Biomedical imaging and detection with broadband spatially coherent supercontinuum laser", SPIE, PO BOX 10 BELLINGHAM WA 98227-0010 USA, vol. 7420, 27 August 2009 (2009-08-27), XP040500611**

**Description**

The present invention relates to a system for and a method of determining the spectral sensitivity of a spectrograph.

Document US 7 554 667 B1 describes a test instrument including a radiation source with a black body radiation source for providing energy in the infrared portion of the spectrum, and a Fabry-Perot etalon with at least first and second etalon plates, wherein the Fabry-Perot etalon is arranged to receive output from the radiation source. One or both of the etalon plates are associated with a wavelength scanning mechanism, comprising a piezoelectric or other actuator for translating the etalon plates with respect to one another.

Document EP 3 327 411 A1 discloses an optical system comprising a telescope coupled to a spectrograph and a focal plane array, wherein a calibration source contains an optical frequency comb which provides for an absolute, repeatable frequency scale defined by a series of laser modes which are equally spaced across the frequency spectrum, and wherein an atomic clock is coupled to the optical frequency comb in order to stabilize the latter. A beam splitter allows coupling of the optical signal from the optical frequency comb with that of a continuous-wave laser which is locked to one comb line and simultaneously fed to a wavemeter, and a Fabry-Perot cavity is provided in the calibration source in order to filter out unwanted modes from the optical frequency comb spectrum.

In document CN 105092027 A, a light supplying apparatus generating a highresolution comb for spectrometer calibration is described. A broadband light source emits light having a continuous spectrum, a collimating device collimates the light form the light source and conveys it to a Fabry-Perot-etalon which transmits narrow band light.

Spectrographs are generally used for determining the intensity of electromagnetic radiation as a function of wavelength or frequency. Specifically, to analyze the spectrum of the electromagnetic radiation such as light by a spectrograph, the light is directed onto a spectral separator of the spectrograph, which separates the light so that its spectral components propagate out of the spectral separator in different directions depending on their respective wavelengths. This spatially separated light is detected by a photodetector comprising a matrix of pixels (i.e., pixel segments) which can individually detect the light. By simultaneously recording the photosignal from each pixel segment receiving its corresponding spatially separated light, the spectrum of the incoming light is determined, the spectrum of the light incident on the spectral separator can be determined.

Especially in spectroscopic applications requiring high precision, such as in astronomical spectroscopy, the spectrograph needs to be accurately calibrated, in order to be able to draw conclusions on the actual wavelength dependent intensity I(λ) of the electromagnetic radiation. Such calibration comprises, in particular, ascertaining the so-called spectral sensitivity of the spectrograph, which is also known as the instrument spectral response function. The spectral sensitivity, S(λ), is wavelength dependent and is proportional to the quotient of the electrical signal and the corresponding intensity of light. Vice versa, from the amplitude A(λ) of the electrical signal transmitted by the photodetector upon which electromagnetic radiation with wavelength λ and intensity I(λ) is incident and the spectral sensitivity S(λ), the wavelength dependent intensity I(λ) of the electromagnetic radiation can be calculated by the following mathematical equation (1):

$$I(\lambda) = A(\lambda) \ / \ S(\lambda) \qquad (1)$$

The spectral sensitivity can be determined by suitably irradiating the spectrograph by a laser beam whose wavelength can be tuned, such as by means of an optical parametric oscillator (OPO). In practice, the laser light tuned to a specific wavelength $\lambda_1$ and having a determined intensity $I(\lambda_1)$ propagates through the spectral separator, is diffracted thereby, and is then detected by the corresponding photodetector pixel segment which generates a photoelectrical signal with amplitude $A(\lambda_1)$. From these values, the spectral sensitivity value for $\lambda_1$ is determined. Subsequently, the laser is tuned to another wavelength $\lambda_2$, and, from the corresponding intensity $I(\lambda_2)$ and the corresponding photoelectrical signal with amplitude $A(\lambda_2)$, the spectral sensitivity value for $\lambda_2$ is determined analogously. This process is repeated for all wavelengths to which the spectrograph is sensitive, to obtain the total spectral sensitivity of the instrument (i.e., the spectrograph). Against this background, it is an object of the present invention to provide a system and a method for more efficiently determining the spectral sensitivity of a spectrograph.

This object may be achieved by a system for and a method of determining the spectral sensitivity of a spectrograph according to claims 1 and 11, respectively.

The system comprises an irradiation device configured to emit first electromagnetic radiation with a first spectrum including at least three substantially simultaneously emitted spectral lines, and a spectrograph comprising a spectral separator and a photodetector with a matrix of pixels. The spectral separator is arranged so as to receive the first electromagnetic radiation and to separate the first electromagnetic radiation so that the at least three spectral lines are assigned to different pixel segments from among the matrix of pixels. Herein, "substantially" simultaneously may mean that a possible time difference between the emission of the different spectral lines may be negligibly small as compared to the overall duration of the determining of the spectral sensitivity. Furthermore, the spectral separator as used herein may be a spatial spectral separator spatially separating the spectral lines, preferably, by at least one of diffraction and diffusion.

In the context of the present disclosure, the first electromagnetic radiation and/or the second electromagnetic radiation described below may include light with wavelengths above the X-ray band and below the radio frequency band, in particular, in one or more of the following spectral bands: ultraviolet (UV; from 10 nm - 400 nm), in particular, extreme ultraviolet (EUV; from 10 nm - 124 nm), and/or near ultraviolet (NUV; 124 nm - 400 nm); visible (VIS; 400 nm - 700 nm); and infrared (700 nm - 350 $\mu$m), in particular, near infrared (NIR; 700nm - 5 $\mu$m), mid infrared (MIR; 5 $\mu$m - 25 $\mu$m), and/or far infrared (FIR; 25 $\mu$m - 350 $\mu$m). I.e., in this context, the term "light" may refer to electromagnetic waves with a wavelength spectrum within any of these bands. Insofar, the spectroscopy discussed herein may be understood as optical spectroscopy. It goes without saying that optical spectroscopy with respect to the spectral band to be analyzed may extend beyond the spectroscopy of visible light. Preferably, the first spectrum wave may extend, in wavelength, over a band from 100 nm to 3 $\mu$m, 200 nm to 2.8 $\mu$m, or 400 nm to 2.4 $\mu$m.

The system allows for calibrating the spectrograph in regard of its spectral sensitivity more quickly and easily. In particular, since the spectral lines are simultaneously emitted by the Irradiation device, and can be simultaneously detected by the photodetector upon being dispersed and/or diffracted by the spectrograph, tuning an irradiation device such as an OPO laser is unnecessary. Thus, the spectral sensitivity / spectral response function of the entire instrument (i.e., the spectrograph) may be determined significantly more quickly. Since the spectral lines are assigned to different pixels of the photodetector, the irradiation device and spectrograph may synergistically provide these advantages. In other words, the simultaneous emission of the spectral lines can be appropriately utilized by the photodetector with the matrix of pixels, since the pixels can be read out relatively quickly. In addition, the system may have a relatively simple and compact design, since optical components required for laser wavelength detuning, such as an OPO, may be avoided. This compact design is particularly advantageous for applications in space, such as astronomical spectroscopy.

The spectral lines may be distinct and/or separate from each other. Specifically, in a spectral diagram showing the intensity of the first electromagnetic radiation over wavelength, the spectral lines may be represented as separate peaks. For two neighboring spectral lines to be understood as being separate, their respective maxima may be spaced apart in wavelength at least by their full width at half maximum. For example, the at least three spectral lines may be spaced apart from each other by at least 10 nm, at least 20 nm or at least 30 nm or at least 50 nm or at least 80 nm or at least 160nm or at least 300nm. The respective maxima of neighboring spectral lines of the at least three spectral lines may be spaced apart by at most 10 nm or at most 30 nm or at most 50 nm or at most 80 nm or at most 160nm or at most 300nm. Furthermore, the number of the at least three spectral lines of the first spectrum may be at least 50, at least 100, at least 200, at least 300, at least 500, or at least 700.

The irradiation device comprises an irradiation source, which generates and emits a second electromagnetic radiation with a second spectrum which is a broadband or continuous spectrum and includes the at least three spectral lines as well as one or more further bands of the electromagnetic spectrum. It is noted that generating the second electromagnetic radiation may comprise converting electrical energy or further electromagnetic radiation other than the first or second electromagnetic radiation to the second electromagnetic radiation. The at least three spectral lines may form part of the further bands, i.e., lie within the further bands. It is noted that, herein, a broadband spectrum is generally understood as a spectrum which extends over a broader wavelength range than each of the spectral lines of the first spectrum. In a variant, the further bands may be one continuous band, comprising all of the at least three spectral lines. I.e., the second spectrum may continuously extend over the first spectrum. In other words, the output power values of the irradiation source may be above 0 throughout the continuous spectrum. Each of the further bands or the continuous spectrum may extend over a wavelength range that is at least 300 nm or at least 500 nm or at least 800 nm or at least 1500 nm or at least 1800 nm wide. The Irradiation source may be SuperK EVO, by NKT Photonics INC., USA.

Preferably, the irradiation source comprises a light source configured to output the second electromagnetic radiation. The light source may be, in particular, a broadband light source and/or a white light source. More specifically, the light source may comprise one or more of a laser, a semiconductor laser, a supercontinuum laser, a supercontinuum fiber laser, and a gas discharge lamp. In particular, it is preferred that the first electromagnetic radiation is not generated and/or emitted by a comb laser, to provide that the system is comparably compact. Accordingly, the first spectrum may be free of a frequency comb as generated by a comb laser.

Furthermore, the electromagnetic radiation may be pulsed or continuous wave. In particular, if the light source is a laser, the laser may be a pulsed laser, a modelocked laser or a continuous wave laser. Most preferably, the laser has a pulse repetition rate in the range of Megahertz or Gigahertz, in particular, between 1 MHz and 500 MHz. Further, the light source may comprise one or more waveguides such as optical fibers. Specifically, the second electromagnetic radiation, when exiting the irradiation source may be coupled to an optical fiber or fiber bundle. The light source may provide the second electromagnetic radiation with a total power of more than 100 mW or more than 1 W. The light source's average output power may be between 0.1 and 100 mW/nm.

Furthermore, the irradiation device may comprise an irradiation conversion device arranged to convert the second electromagnetic radiation to the first electromagnetic radiation before the first electromagnetic radiation is emitted by the irradiation device. The irradiation conversion device may be interposed between the irradiation source and the spectrograph. In particular, along the propagation direction or axis of the first and/or the second radiation, the irradiation conversion device may be arranged proximate to the irradiation source so that the second spectrum of the second electromagnetic radiation arrives at an entrance of the irradiation conversion device. In other words, the system for determining the spectral sensitivity of the spectrograph may be free of any element suitable for substantially modifying the second spectrum, such as an optical filter, between the irradiation source and the irradiation conversion device.

In particular, the irradiation conversion device may be a filter. The filter may be configured to filter out every portion of the second spectrum other than the at least three spectral lines. In a variant, the irradiation conversion device may be or may comprise a Fabry-Perot resonator having a resonator length, L. When the second electromagnetic radiation with the second spectrum is incident on the Fabry-Perot resonator, this resonator may be configured to transmit only the first spectrum including only the at least three spectral lines. The Fabry-Perot resonator may comprise a plurality of semi-transparent mirrors spaced apart by a distance. A cavity may be formed between the mirrors. The distance may be equal to the resonator length, L. The following equation (2) may be valid for the wavelengths, $\lambda_n$, of the at least three spectral lines:

$$\lambda_n = 2L/n \qquad (2)$$

Herein, the parameter n is an integer. The length, L, may be between $1\mu m$ and 1mm, in particular, between 0,1 mm and 1 mm. Furthermore, the Fabry-Perot resonator may have a free spectral range between 10 and 200 nm, preferably between 30 and 150 nm, and, more preferably, between 50 and 110 nm. For example, the free spectral range may be between 70 and 90 nm. Moreover, the Fabry-Perot resonator may have a finesse value between 500 and 1500, between 700 and 1300, or between 900 and 1100.

Moreover, it is conceivable that the resonator length, L, of the Fabry-Perot resonator is variable. Specifically, the Fabry-Perot resonator may be configured so that its resonator length, L, may be varied at most by such an extent that the at least three spectral lines remain assigned to the aforementioned different pixels from among the matrix of pixels. Preferably, varying the Fabry-Perot resonator length, L, does not shift any of the at least three spectral lines to another one of the pixels. Alternatively, it is conceivable that the resonator length, L, is changed to such an extent that the at least three spectral lines are shifted from one pixel to another.

Specifically, the resonator length, L, may be varied by less than 5% or less than 3% or less than 2% of the minimum value of the resonator length, in particular within the above mentioned boundaries from the length, L. For varying the length, the Fabry-Perot resonator may comprise a piezo element, which may be configured to set the resonator length, L, in dependence of a voltage applied to the piezo element.

In a variant, the Fabry-Perot resonator may be a fiber Fabry-Perot resonator. This configuration is particularly advantageous when the irradiation source is fibercoupled, i.e., when the second electromagnetic radiation is emitted by the irradiation source through an optical fiber. In this case, the optical fiber coupled to the irradiation source is preferably likewise coupled to an input port of the fiber Fabry-Perot resonator, so that aligning these optical components is unnecessary. In further detail, the fiber Fabry-Perot resonator may be lensless, and may consist of a single mode optical fiber arranged between two highly reflective multilayer mirrors. In particular, the fiber Fabry-Perot resonator may be enclosed in a housing, comprising the inlet port and an outlet port. It is noted that not only the inlet port, but also the outlet port may be configured for coupling a connector of an input optical fiber and output optical fiber, respectively, thereto. On the side of the output optical fiber opposite of the Fabry-Perot resonator, the output optical fiber may be configured to be coupled to the spectrograph. Except of the inlet and outlet ports, the housing may be closed, in order to block external radiation from being coupled to the Fabry-Perot resonator. The fiber Fabry-Perot resonator may be the product FFP-TF 1520-1620-300M-1000-5.0-065 of Micron Optics Inc., USA.

In an example not falling under the scope of the invention, the irradiation source may be arranged outside of the Fabry-Perot resonator (i.e., outside of the cavity), in particular, on a side of the Fabry-Perot resonator opposite of the spectrograph with respect to the axis along which the first and/or second electromagnetic radiation propagates (propagation path). Note that the word "axis" is not meant as a straight axis herein. Rather, the direction of the axis may change between the irradiation source and the spectral separator. Preferably, the irradiation source is then configured to emit the second electromagnetic radiation towards the irradiation conversion device, so that the second electromagnetic radiation enters the Fabry Perot resonator by propagating through a mirror of the Fabry Perot resonator arranged opposite of the spectrograph, and the first electromagnetic radiation is output out of the Fabry Perot resonator through the mirror facing the spectral separator.

According to the invention, the irradiation source is arranged inside of the Fabry-Perot resonator, in particular, in the cavity located between the mirrors. Other than in the configuration, in which the irradiation source is arranged outside of the resonator, the second electromagnetic radiation may be emitted in the cavity, so that it does not propagate through any of the mirrors of the Fabry-Perot resonator. In this case, the irradiation source may comprise a laser medium, such as, in the form of a (doped) crystal, a (doped) glass, a semiconductor (e.g., gallium arsenide (GaAs), indium gallium arsenide (In-GaAs), or gallium nitride (GaN)), or a liquid with a die. By this configuration, the degree of compactness of the system may be further increased.

The at least three substantially simultaneously emitted spectral lines may be equidistant, i.e. uniformly spaced, in frequency or wavelength. The spectral separator may be provided with a prism and/or a grating, in particular, an Echelle-grating, and may be arranged so that the first electromagnetic radiation propagates into the spectrograph such that the entire first spectrum may arrive at the spectral separator and may be separated thereby.

The photodetector may be a CCD chip. The CCD chip may be a linear (1D) chip or a 2D chip. If the CCD chip is a 1D chip, the number of pixels of the photodetector/the CCD chip may essentially corresponds to the number of the at least three spectral lines or may exceed the number of the at least three spectral lines by at most 50 % or at most 20 % or at most 10 %. Preferably, the photodetector is arranged such that each of the spectral lines is detected by another pixel of the chip. Specifically, if the photodetector is a CCD chip, a part of the first electromagnetic radiation corresponding to a first one of the at least three spectral lines is incident on a first pixel, another part of the first electromagnetic radiation corresponding to a second one of the at least three spectral lines is incident on a second pixel, a yet further part of the first electromagnetic radiation corresponding to a third one of the at least three spectral lines is incident on a third pixel, etc.. If the CCD chip is a 2D chip, the first, second, and third pixels may be arranged along a main direction, in particular, an edge of the chip.

Furthermore, some or all of the pixels may respectively comprise a plurality of sub-pixels. In this case, it is preferred that the irradiation conversion device comprises a Fabry-Perot resonator with variable length. The resonator may be configured such that changing the resonator length from a first length to a second length causes each of the at least three spectral lines to shift in wavelength, and to become assigned to a different sub-pixel of the respective pixel assigned to the respective spectral line. In further detail, when the resonator has a first length, the first spectral line may be assigned to a first sub-pixel of the first pixel, the second spectral line may be assigned to a first sub-pixel of the second pixel, and the third spectral line may be assigned to a first sub-pixel off the third pixel. When the resonator has the second length, which may be larger than the first length, the spectral lines may be shifted in wavelength according to above equation (2), so that the first spectral line may be assigned to a second sub-pixel of the first pixel, the second spectral line may be assigned to a second sub-pixel of the second pixel, and the third spectral line may be assigned to a second sub-pixel of the third pixel. The first sub-pixels may be different from the second sub-pixels, and may be arranged on the CCD chip adjacent to one another.

The system may further comprise a controller configured for controlling the irradiation device and the spectrograph as well as all of their above described components. The controller may comprise a storage section in which predetermined intensity data of the first electromagnetic radiation incident on the spectral separator is stored. The intensity data may comprise a power spectrum of the first electromagnetic radiation, comprising power values $(I(\lambda_n))$ for each of the wavelengths $\lambda_n$ detectable by the spectrograph. The controller is further configured to determine the spectral sensitivity based on an electrical signal output by the photodetector and above equation (1).

The method of determining the spectral sensitivity of a spectrograph may comprise emitting a first electromagnetic radiation with a first spectrum including at least three substantially simultaneously emitted, equidistant spectral lines by an irradiation device; receiving the electromagnetic radiation by a spectral separator of a spectrograph; separating the electromagnetic radiation; detecting the separated electromagnetic radiation by a photodetector of the spectrograph, wherein the photodetector comprises a matrix of pixels, wherein the at least three spectral lines are assigned to different pixels from among the matrix of pixels; and determining the spectral sensitivity of the spectrograph based on an (electrical) photodetector signal intensity of the pixels.

The method may be carried out on ground or in space, in particular, in Earth orbit, and/or may further comprise method steps corresponding to any of the above described properties or functions of the system for determining the spectral sensitivity of a spectrograph.

Preferred embodiments of a system for determining the spectral sensitivity of a spectrograph are now described in further detail by referring to the enclosed schematic drawings, wherein

Fig. 1 shows a first embodiment of a system for determining the spectral sensitivity of a spectrograph;

Fig. 2 shows a detailed view of an irradiation device not falling under the scope of the invention of the system of Fig. 1;

Fig. 3 shows an embodiment of a system for determining the spectral sensitivity of a spectrograph, in which the irradiation source is arranged between the mirrors of the Fabry-Perot resonator;

Fig. 4 shows a third embodiment of a system for determining the spectral sensitivity of a spectrograph, in which the length of the Fabry-Perot resonator is variable.

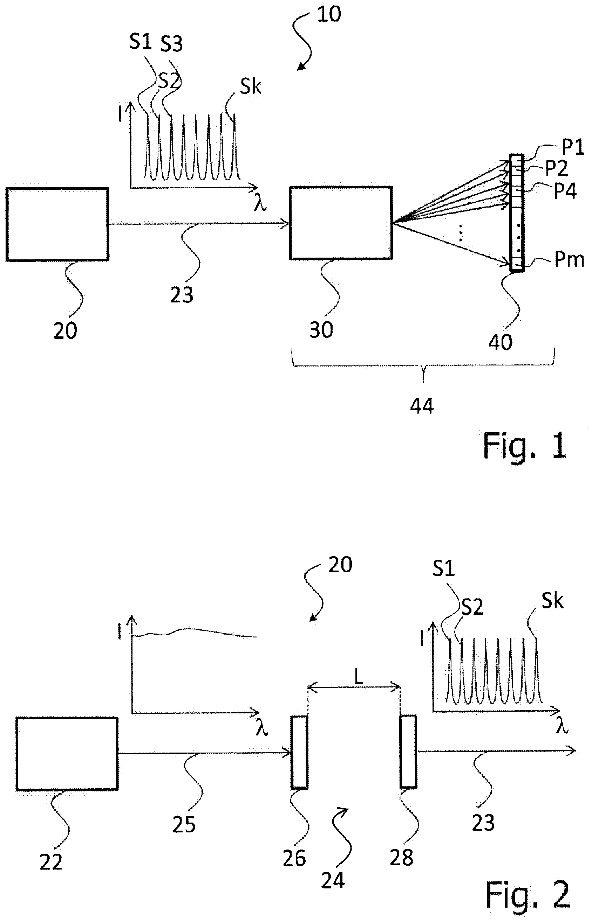

Figs. 1 and 2 show a system 10 for determining the spectral sensitivity of a spectrograph 44, which comprises an irradiation device 20 with an irradiation source 22 and an irradiation conversion device 24, herein, formed as a Fabry-Perot resonator, in particular, a fiber Fabry-Perot resonator in this variant. The spectrograph 44 comprises a separator 30 and a photodetector 40 with a plurality of pixels forming a matrix of pixels P1-Pm. Herein, the photodetector 40 is a linear array CCD photodetector, in which the pixels P1-Pm are arranged vertically in a column in the view of Fig. 1.

Alternatively, the photodetector 40 may be a 2D array CCD photodetector with further pixels arranged in rows perpendicular to the column of pixels and extending from the pixels P1-Pm. The spectral separator 30 is a prism or grating and is arranged so as to receive the first electromagnetic radiation 23 and to separate the first electromagnetic radiation 23 so that the at least three spectral lines S1-Sk are assigned to, i.e., incident on and detected by different pixels from among the matrix of pixels P1-Pm.

The irradiation device 20 is configured to generate and emit first electromagnetic radiation 23 having a first spectrum including k equidistant spectral lines S1-Sk, wherein, in this variant, k equals 50. In Fig. 1 and the remaining drawings, only 8 of these spectral lines are shown for clear illustration. The number of pixels m is chosen to be 10 times the number of spectral lines, namely 500, wherein only the first five and the last pixel are shown in the drawings for clarity. In the intensity over wavelength diagram $I(\lambda)$, the spectral lines are separate equidistant peaks, again for illustration purposes, all having the same amplitude. The free spectral range of the Fabry-Perot resonator is, in this case, approximately 80 nm. Note that the amplitudes of the peaks may differ. Since the first spectrum characterizes the first electromagnetic radiation, all spectral lines S1-Sk, i.e. peaks, are simultaneously emitted by the irradiation device 20.

As shown in Fig. 1, the first electromagnetic radiation 23 has the first spectrum not only at the site where it is output from the Fabry-Perot resonator (irradiation conversion device 24), but also where it enters the spectrograph 44. In other words, the portion of the first electromagnetic radiation corresponding to any of the spectral lines S1 to Sk is not hindered from propagating from the irradiation conversion device 24 to the spectrograph 44. Nevertheless, it is conceivable that optical elements such as one or more mirrors or one or more lenses are arranged between the irradiation device 20 and the spectrograph 44 for guiding the first electromagnetic radiation.

The irradiation source 22 of the irradiation device 20 is a white light source configured to emit second electromagnetic radiation 25 with a second (broadband) spectrum which is continuous and includes all spectral lines S1-Sk. Herein, the second spectrum extends over a wavelength band of 2 $\mu$m width, specifically from 400 nm to 2.4 $\mu$m. In particular, the irradiation source 22 is a supercontinuum laser which is fiber coupled such that the second electromagnetic radiation is output from the irradiation source 22 through an optical fiber or fiber bundle.

The irradiation conversion device 24 (i.e., the Fabry-Perot resonator) is arranged to convert the second electromagnetic radiation 25 to the first electromagnetic radiation 23 to be emitted by the irradiation device 20. In further detail, the second electromagnetic radiation 25 emitted by the irradiation source 22 outside of the Fabry-Perot resonator is incident on a first semitransparent mirror 26 of the Fabry-Perot resonator. A second semitransparent mirror 28 is arranged on the side of the first semitransparent mirror 26 opposite of the irradiation device at a distance corresponding to the resonator length L of the Fabry-Perot resonator from the first semitransparent mirror 26.

The Fabry-Perot resonator has a finesse on the order of 1000 and is configured to transmit only the electromagnetic waves of the second spectrum which are resonating between the mirrors 26 and 28, i.e., for which the equation $\lambda_n = 2L/n$ is valid, wherein n is an integer. Assuming that $\lambda_n$ are equal to the wavelengths at which the peaks/spectral lines S1-Sk are present in the first spectrum, the Fabry-Perot resonator filters out all of the second spectrum except of the first spectrum (i.e., the first spectral lines). Accordingly, the first electromagnetic radiation 23 with the first spectrum including the at least three spectral lines S1-Sk is transmitted through the irradiation conversion device 24 to the spectrograph 44.

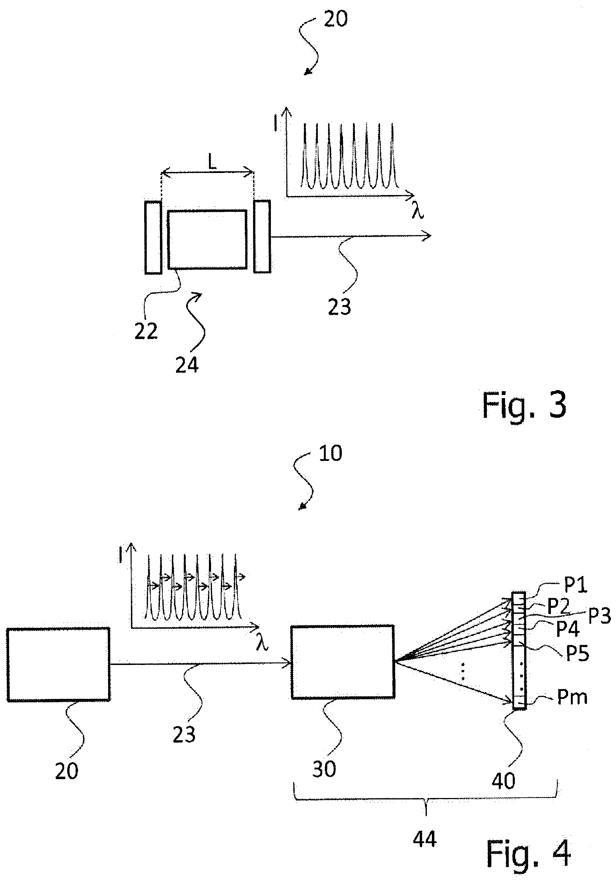

Fig. 3 shows an irradiation device 20 of a further system 10 for determining the spectral sensitivity of a spectrograph 44. This irradiation device 20 differentiates from the irradiation device 20 of the system 10 of Figs. 1 and 2 by its irradiation source 22 being arranged inside the cavity of the Fabry-Perot resonator, in particular, between the semi-transparent mirrors 26, 28, rather than outside of the cavity. The irradiation source 22 may comprise a laser medium or gain medium, so that the irradiation source 22 in combination with the Fabry-Perot resonator form a Fabry-Perot laser. Otherwise, the irradiation device 20 of Fig. 3 and the system 10 of which this irradiation device 20 forms part may comprise any of the features of the irradiation device 20 and the system 10 of Figs. 1 and 2, respectively.

Fig. 4 shows a yet further system 10 for determining the spectral sensitivity of a spectrograph 44. This system 10 differentiates from the system 10 of Figs. 1 and 2 by the Fabry-Perot resonator having a variable length. Herein, the Fabry-Perot resonator is configured for varying the resonator length between a first length at which the spectral line S1 is assigned to a first pixel, e.g., P1 and a second length at which the spectral line S1 is assigned to a second pixel, e.g., P2, which may in a further variant not be adjacent to the first pixel. Accordingly, when the Fabry-Perot resonator has the first length, the portion of the first electromagnetic radiation 23 corresponding to the first spectral line S1 may be detected by the first pixel P1, the portion of the first electromagnetic radiation corresponding to the second spectral line S2 may be detected by a second pixel P3, the portion of the first electromagnetic radiation 23 corresponding to the third spectral line S3 may be detected by a third pixel P5, etc., and the portion of the first electromagnetic radiation 23 corresponding to the k-th spectral line Sk may be detected by the (m-1)-th pixel.

Vice versa, when the Fabry-Perot resonator has the second length, the portion of the first electromagnetic radiation 23 corresponding to the first spectral line S1 may be detected by pixel P2 adjacent to the first pixel P1, the portion of the first electromagnetic radiation 23 corresponding to the second spectral line S2 may be detected by pixel P4 adjacent to the second pixel P3, the portion of the first electromagnetic radiation 23 corresponding to the third spectral line S3 may be detected by a pixel adjacent to the third pixel P5, etc., and the portion of the first electromagnetic radiation corresponding to the k-th spectral line Sk may be detected by the pixel Pm adjacent to the (m-1)-th pixel (not shown in the drawings). Note that additional pixels may be located between pixels P2 and P3, between pixels P4 and P5, etc., i.e., between pixels not specified above to be adjacent to each other. On the other hand, adjacent pixels may be directly adjacent to each other without any pixel interposed between them.

Otherwise, the system 10 of Fig. 4 may comprise any of the features of the systems 10 of Figs. 1 to 3, respectively.

The systems of Figs. 1 to 4 may each further comprise a controller (not shown) configured for controlling the irradiation device 20 and the spectrograph 44 as well as any of their components, in particular, the irradiation source 22, the irradiation conversion device 24, the spectral separator 30, and/or the photodetector 40 according to any of their above described functions. The controller may comprise a storage section in which predetermined intensity data of the first electromagnetic radiation incident on the spectral separator is stored. The intensity data may comprise a power spectrum of the first electromagnetic radiation, comprising power values $(I(\lambda_n))$ for each of the wavelengths $\lambda_n$ detectable by the spectrograph. The controller is further configured to determine the spectral sensitivity based on an electrical signal output by the photodetector 40 and above equation (1). If the length of the Fabry-Perot resonator is variable, it is preferred that the storage section comprises predetermined intensity data of the first electromagnetic radiation incident on the spectrograph for each of the lengths adoptable by the resonator. Also, if the photodetector 40 comprises pixels, it is, particularly, preferred that the controller is further configured to determine the spectral sensitivity based on an electrical signal output by each of the pixels and above equation (1).

**Claims**

1. A system (10) for determining the spectral sensitivity of a spectrograph (44),

   comprising
   an irradiation device (20) configured to emit first electromagnetic radiation (23) with a first spectrum including at least three simultaneously emitted, spectral lines (S1-Sk) equidistant in wavelength, and
   a spectrograph (44) comprising a spectral separator (30) and a photodetector (40) with a plurality of pixels (P1-Pm), wherein the spectral separator (30) is arranged so as to receive the first electromagnetic radiation (23) and to separate the first electromagnetic radiation (23) so that the at least three spectral lines (S1-Sk) are assigned to different pixels from among the plurality of pixels (P1-Pm), wherein the irradiation device (20) comprises
   an irradiation source (22) configured to emit second electromagnetic radiation (25) with a second spectrum which is broadband or continuous and includes the at least three spectral lines (S1-Sk), and
   an irradiation conversion device (24) arranged to convert the second electromagnetic radiation (25) to the first electromagnetic radiation (23) to be emitted by the irradiation device (20), wherein the irradiation conversion device (24) comprises a Fabry-Perot resonator having a resonator length, L, and being configured to transmit the first electromagnetic radiation (23) including the at least three spectral lines (S1-Sk), wherein the irradiation source (22) is arranged inside of the Fabry-Perot resonator.

2. The system according to claim 1, wherein the second spectrum extends over a wavelength band which is at least 300 nm or at least 500 nm or at least 800 nm or at least 1500 nm wide.

3. The system according to claim 1 or 2, wherein the irradiation source (22) comprises a white light source configured to output the second electromagnetic radiation, and
   wherein the white light source optionally comprises a supercontinuum laser, a supercontinuum fiber laser, and/or a gas discharge lamp.

4. The system according to claim 1,

   wherein the Fabry-Perot resonator comprises a plurality of semi-transparent mirrors (26, 28) spaced apart by a distance to form a cavity therebetween, wherein the distance equals the resonator length, L,

wherein the following equational condition is valid for the wavelengths, ▪$_n$, of the at least three spectral lines:

$$\lambda_n = 2L/n,$$

wherein n is an integer.

5. The system according to claim 1 or 4,

wherein the resonator length, L, of the Fabry-Perot resonator is variable,
wherein the Fabry-Perot resonator optionally comprises a piezo element configured to set the resonator length, L, in dependence of a voltage applied to the piezo element.

6. The system according to one of claims 1 to 5, wherein the Fabry-Perot resonator is a fiber Fabry-Perot resonator.

7. The system according to one of the preceding claims,

wherein respective maxima of neighboring spectral lines (S1, S2) of the at least three spectral lines (S1-Sk) are spaced apart by at most 30 nm or at most 50 nm or at most 80 nm, and/or
wherein the number of the at least three spectral lines (S1-Sk) of the first spectrum (23) is at least 50, at least 100, at least 200, at least 300, at least 400, or at least 500.

8. The system according to one of the preceding claims,
wherein the spectral separator (30) is provided with a prism and/or a grating, in particular, an Echelle-grating.

9. The system according to one of the preceding claims,

wherein the number of pixels, m, exceeds the number of the at least three spectral lines, k, by at most 50 % or at most 20 % or at most 10 %, and/or
wherein the number of pixels, m, essentially corresponds to the number of the at least three spectral lines, k.

10. The system according to claim 9 in combination with claim 5,
wherein the Fabry-Perot resonator is configured for varying the resonator length between a first length at which a spectral line (S1) from among the at least three spectral lines (S1-Sk) is assigned to a first pixel of the plurality of pixels and a second length at which the spectral line (S1) is assigned to a second pixel of the plurality of pixels.

11. A method of determining the spectral sensitivity of a spectrograph (44), comprising

emitting first electromagnetic radiation (23) with a first spectrum including at least three simultaneously emitted, spectral lines (S1-Sk) equidistant in wavelength by an irradiation device (20);
receiving the first electromagnetic radiation (23) by a spectral separator (30) of a spectrograph (44);
separating the first electromagnetic radiation (23);
detecting the separated first electromagnetic radiation by a photodetector (40) of the spectrograph (44), wherein the photodetector (40) comprises a plurality of pixels (P1-Pm), wherein the at least three spectral lines (S1-Sk) are assigned to different pixels (P1, P2) from among the plurality of pixels (P1-Pm); and
determining the spectral sensitivity of the spectrograph (44) based on a photodetector signal intensity of the pixels (P1-Pm), wherein the irradiation device (20) comprises
an irradiation source (22) configured to emit second electromagnetic radiation (25) with a second spectrum which is broadband or continuous and includes the at least three spectral lines (S1-Sk), and
an irradiation conversion device (24) arranged to convert the second electromagnetic radiation (25) to the first electromagnetic radiation (23) to be emitted by the irradiation device (20), wherein the irradiation conversion device (24) comprises a Fabry-Perot resonator having a resonator length, L, and being configured to transmit the first electromagnetic radiation (23) including the at least three spectral lines (S1-Sk), wherein the irradiation source (22) is arranged inside of the Fabry-Perot resonator.

**Patentansprüche**

1. Ein System (10) zur Bestimmung der spektralen Empfindlichkeit eines Spektrographen (44), umfassend

eine Bestrahlungsvorrichtung (20), die dazu konfiguriert ist, erste elektromagnetische Strahlung (23) mit einem ersten Spektrum auszusenden, das mindestens drei gleichzeitig emittierte spektrale Linien (S1-Sk) umfasst, die in ihrer Wellenlänge äquidistant sind, und
einen Spektrographen (44), der ein Spektraltrennelement (30) und einen Photodetektor (40) mit einer Vielzahl von Pixeln (P1-Pm) umfasst, wobei das Spektraltrennelement (30) so angeordnet ist, dass es die erste elektromagnetische Strahlung (23) empfängt und die erste elektromagnetische Strahlung (23) derart trennt, dass die mindestens drei spektralen Linien (S1-Sk) unterschiedlichen Pixeln aus der Vielzahl von Pixeln (P1-Pm) zugeordnet werden, wobei die Bestrahlungsvorrichtung (20) umfasst

eine Bestrahlungsquelle (22), die dazu konfiguriert ist, zweite elektromagnetische Strahlung (25) mit einem zweiten Spektrum auszusenden, das breitbandig oder kontinuierlich ist und die mindestens drei spektralen Linien (S1-Sk) umfasst, und

eine Bestrahlungsumwandlungsvorrichtung (24), die so angeordnet ist, dass sie die zweite elektromagnetische Strahlung (25) in die von der Bestrahlungsvorrichtung (20) auszusendende erste elektromagnetische Strahlung (23) umwandelt, wobei die Bestrahlungsumwandlungsvorrichtung (24) einen Fabry-Perot-Resonator mit einer Resonatorlänge L aufweist, der dazu konfiguriert ist, die erste elektromagnetische Strahlung (23) einschließlich der mindestens drei spektralen Linien (S1-Sk) zu übertragen, wobei die Bestrahlungsquelle (22) innerhalb des Fabry-Perot-Resonators angeordnet ist.

2. Das System nach Anspruch 1,
wobei das zweite Spektrum sich über ein Wellenlängenband erstreckt, das mindestens 300 nm oder mindestens 500 nm oder mindestens 800 nm oder mindestens 1500 nm breit ist.

3. Das System nach Anspruch 1 oder 2,
wobei die Bestrahlungsquelle (22) eine Weißlichtquelle umfasst, die dazu konfiguriert ist, die zweite elektromagnetische Strahlung auszugeben, und wobei die Weißlichtquelle wahlweise einen Superkontinuumlaser, einen Superkontinuum-Faserlaser und/oder eine Gasentladungslampe umfasst.

4. Das System nach Anspruch 1,

wobei der Fabry-Perot-Resonator eine Vielzahl von halbdurchlässigen Spiegeln (26, 28) umfasst, die in einem Abstand voneinander angeordnet sind, um dazwischen einen Resonatorhohlraum zu bilden, wobei der Abstand der Resonatorlänge L entspricht,
wobei die folgende Gleichungsbedingung für die Wellenlängen $\lambda n$ der mindestens drei spektralen Linien gilt:

$$\lambda_n = 2L/n,$$

wobei n eine ganze Zahl ist.

5. Das System nach Anspruch 1 oder 4,
wobei die Resonatorlänge L des Fabry-Perot-Resonators variabel ist, wobei der Fabry-Perot-Resonator wahlweise ein Piezoelement umfasst, das dazu konfiguriert ist, die Resonatorlänge L in Abhängigkeit von einer an das Piezoelement angelegten Spannung einzustellen.

6. Das System nach einem der Ansprüche 1 bis 5,
wobei der Fabry-Perot-Resonator ein Faser-Fabry-Perot-Resonator ist.

7. Das System nach einem der vorhergehenden Ansprüche,

wobei jeweilige Maxima benachbarter spektraler Linien (S1, S2) der mindestens drei spektralen Linien (S1-Sk) höchstens 30 nm oder höchstens 50 nm oder höchstens 80 nm voneinander beabstandet sind, und/oder
wobei die Anzahl der mindestens drei spektralen Linien (S1-Sk) des ersten Spektrums (23) mindestens 50, mindestens 100, mindestens 200, mindestens 300, mindestens 400 oder mindestens 500 beträgt.

8. Das System nach einem der vorhergehenden Ansprüche,
wobei das Spektraltrennelement (30) mit einem Prisma und/oder einem Gitter, insbesondere einem Échelle-Gitter, versehen ist.

9. Das System nach einem der vorhergehenden Ansprüche,
wobei die Anzahl der Pixel m die Anzahl der mindestens drei spektralen Linien k um höchstens 50 % oder höchstens 20 % oder höchstens 10 % übersteigt, und/oder wobei die Anzahl der Pixel m im Wesentlichen der Anzahl der mindestens drei spektralen Linien k entspricht.

10. Das System nach Anspruch 9 in Kombination mit Anspruch 5,
wobei der Fabry-Perot-Resonator dafür konfiguriert ist, die Resonatorlänge zwischen einer ersten Länge, bei der eine spektrale Linie (S1) aus den mindestens drei spektralen Linien (S1-Sk) einem ersten Pixel der Vielzahl von Pixeln zugeordnet ist, und einer zweiten Länge, bei der dieselbe spektrale Linie (S1) einem zweiten Pixel der Vielzahl von Pixeln zugeordnet ist, zu variieren.

11. Ein Verfahren zur Bestimmung der spektralen Empfindlichkeit eines Spektrographen (44), umfassend

Aussenden erster elektromagnetischer Strahlung (23) mit einem ersten Spektrum, das mindestens drei gleichzeitig emittierte spektrale Linien (S1-Sk) umfasst, die in ihrer Wellenlänge äquidistant sind, durch eine Bestrahlungsvorrichtung (20);

Empfangen der ersten elektromagnetischen Strahlung (23) durch ein Spektraltrennelement (30) eines Spektrographen (44);

Trennen der ersten elektromagnetischen Strahlung (23);

Detektieren der getrennten ersten elektromagnetischen Strahlung durch einen Photodetektor (40) des Spektrographen (44), wobei der Photodetektor (40) eine Vielzahl von Pixeln (P1-Pm) aufweist, wobei die mindestens drei spektralen Linien (S1-Sk) unterschiedlichen Pixeln (P1, P2) aus der Vielzahl von Pixeln (P1-Pm) zugeordnet sind; und

Bestimmen der spektralen Empfindlichkeit des Spektrographen (44) basierend auf einer Photodetektorsignalintensität der Pixel (P1-Pm), wobei die Bestrahlungsvorrichtung (20) umfasst

eine Bestrahlungsquelle (22), die dazu konfiguriert ist, zweite elektromagnetische Strahlung (25) mit einem zweiten Spektrum auszusenden, das breitbandig oder kontinuierlich ist und die mindestens drei spektralen Linien (S1-Sk) umfasst, und

eine Bestrahlungsumwandlungsvorrichtung (24), die so angeordnet ist, dass sie die zweite elektromagnetische Strahlung (25) in die von der Bestrahlungsvorrichtung (20) auszusendende erste elektromagnetische Strahlung (23) umwandelt, wobei die Bestrahlungsumwandlungsvorrichtung (24) einen Fabry-Perot-Resonator mit einer Resonatorlänge L aufweist, der dazu konfiguriert ist, die erste elektromagnetische Strahlung (23) einschließlich der mindestens drei spektralen Linien (S1-Sk) zu übertragen, wobei die Bestrahlungsquelle (22) innerhalb des Fabry-Perot-Resonators angeordnet ist.

## Revendications

1. Système (10) pour déterminer la sensibilité spectrale d'un spectrographe (44), comprenant

   un dispositif de rayonnement (20) conçu pour émettre un premier rayonnement électromagnétique (23) ayant un premier spectre comprenant au moins trois raies spectrales (S1-Sk) émises simultanément et équidistantes en longueur d'onde, et

   un spectrographe (44) comprenant un séparateur spectral (30) et un photodétecteur (40) avec une pluralité de pixels (P1-Pm), dans lequel le séparateur spectral (30) est disposé de manière à recevoir le premier rayonnement électromagnétique (23) et à séparer le premier rayonnement électromagnétique (23) de sorte que les au moins trois raies spectrales (S1-Sk) soient affectées à différents pixels parmi la pluralité de pixels (P1-Pm), dans lequel le dispositif de rayonnement (20) comprend

   une source de rayonnement (22) conçue pour émettre un second rayonnement électromagnétique (25) ayant un second spectre qui est à large bande ou continu et comprend les au moins trois raies spectrales (S1-Sk), et

   un dispositif de conversion de rayonnement (24) conçu pour convertir le second rayonnement électromagnétique (25) en premier rayonnement électromagnétique (23) devant être émis par le dispositif de rayonnement (20), le dispositif de conversion de rayonnement (24) comprenant un résonateur Fabry-Perot ayant une longueur de résonateur L et étant conçu pour transmettre le premier rayonnement électromagnétique (23) comprenant les au moins trois raies spectrales (S1-Sk), la source de rayonnement (22) étant disposée à l'intérieur du résonateur Fabry-Perot.

2. Système selon la revendication 1,
   dans lequel le second spectre s'étend sur une bande de longueur d'onde qui a une largeur d'au moins 300 nm ou d'au moins 500 nm ou d'au moins 800 nm ou d'au moins 1500 nm.

3. Système selon la revendication 1 ou 2,
   dans lequel la source de rayonnement (22) comprend une source de lumière blanche conçue pour émettre le second rayonnement électromagnétique, et
   dans lequel la source de lumière blanche comprend éventuellement un laser supercontinuum, un laser à fibre supercontinuum et/ou une lampe à décharge de gaz.

4. Système selon la revendication 1,

   dans lequel le résonateur Fabry-Perot comprend plusieurs miroirs semitransparents (26, 28) espacés d'une certaine distance pour former une cavité entre eux, la distance étant égale à la longueur du résonateur, L,
   dans lequel la condition d'équation suivante est valable pour les longueurs d'onde, $\lambda_n$, des au moins trois raies spectrales:

$$\lambda_n = 2L/n,$$

dans lequel n est un nombre entier.

5. Système selon la revendication 1 ou 4,

dans lequel la longueur du résonateur, L, du résonateur Fabry-Perot est variable, dans lequel le résonateur Fabry-Perot comprend éventuellement un élément piézoélectrique conçu pour régler la longueur du résonateur, L, en fonction d'une tension appliquée à l'élément piézoélectrique.

6. Système selon l'une quelconque des revendications 1 à 5, dans lequel le résonateur Fabry-Perot est un résonateur Fabry-Perot à fibre.

7. Système selon l'une quelconque des revendications précédentes,

dans lequel les maxima respectifs des raies spectrales voisines (S1, S2) des au moins trois raies spectrales (S1-Sk) sont espacés d'au plus 30 nm ou d'au plus 50 nm ou d'au plus 80 nm, et/ou dans lequel le nombre des au moins trois raies spectrales (S1-Sk) du premier spectre (23) est d'au moins 50, d'au moins 100, d'au moins 200, d'au moins 300, d'au moins 400 ou d'au moins 500.

8. Système selon l'une quelconque des revendications précédentes, dans lequel le séparateur spectral (30) est muni d'un prisme et/ou d'un réseau, en particulier d'un réseau d'Echelle.

9. Système selon l'une quelconque des revendications précédentes,

dans lequel le nombre de pixels, m, dépasse le nombre d'au moins trois raies spectrales, k, d'au plus 50 % ou d'au plus 20 % ou d'au plus 10 %, et/ou dans lequel le nombre de pixels, m, correspond essentiellement au nombre des au moins trois raies spectrales, k.

10. Système selon la revendication 9 en combinaison avec la revendication 5, dans lequel le résonateur Fabry-Perot est conçu pour modifier la longueur du résonateur entre une première longueur à laquelle une raie spectrale (S1) parmi les au moins trois raies spectrales (S1-Sk) est affectée à un premier pixel de la pluralité de pixels et une deuxième longueur à laquelle la raie spectrale (S1) est affectée à un deuxième pixel de la pluralité de pixels.

11. Procédé de détermination de la sensibilité spectrale d'un spectrographe (44), comprenant

l'émission du premier rayonnement électromagnétique (23) ayant un premier spectre comprenant au moins trois raies spectrales (S1-Sk) émises simultanément équidistantes en longueur d'onde par un dispositif de rayonnement (20); la réception du premier rayonnement électromagnétique (23) par un séparateur spectral (30) d'un spectrographe (44); la séparation du premier rayonnement électromagnétique (23); la détection du premier rayonnement électromagnétique séparé par un photodétecteur (40) du spectrographe (44), le photodétecteur (40) comprenant une pluralité de pixels (P1-Pm), dans lequel les au moins trois raies spectrales (S1-Sk) étant affectées à différents pixels (P1, P2) parmi la pluralité de pixels (P1-Pm); et la détermination de la sensibilité spectrale du spectrographe (44) sur la base de l'intensité du signal du photodétecteur des pixels (P1-Pm), le dispositif de rayonnement (20) comprenant une source de rayonnement (22) conçue pour émettre un second rayonnement électromagnétique (25) ayant un second spectre qui est à large bande ou continu et comprend les au moins trois raies spectrales (S1-Sk), et un dispositif de conversion de rayonnement (24) conçu pour convertir le second rayonnement électromagnétique (25) en premier rayonnement électromagnétique (23) devant être émis par le dispositif de rayonnement (20), le dispositif de conversion de rayonnement (24) comprenant un résonateur Fabry-Perot ayant une longueur de résonateur L et étant conçu pour transmettre le premier rayonnement électromagnétique (23) comprenant les au moins trois raies spectrales (S1-Sk), la source de rayonnement (22) étant disposée à l'intérieur du résonateur Fabry-Perot.

Fig. 1

Fig. 2

Fig. 3

Fig. 4

**EP 3 757 532 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7554667 B1
- EP 3327411 A1

- CN 105092027 A